# EUROPEAN PATENT SPECIFICATION

(11) **EP 2 064 259 B1**
(45) Date of publication and mention of the grant of the patent: **23.10.2013**
(21) Application number: 07820176.1
(22) Date of filing: 13.09.2007
(51) Int. Cl.: C08G 61/12, C08L 65/00, C08G 59/40

(54) **LOW TEMPERATURE curable composition comprising a benzoxazine component**
NIEDERTEMPERATURHÄRTBARE Benzoxazin-enthältende Zusammenstellung
Composition réticulable à basse température comprenant un composé de benzoxazine

(30) Priority: 21.09.2006 EP 06019841
(43) Date of publication of application: 03.06.2009
(73) Proprietor: Henkel AG & Co. KGaA, 40589 Düsseldorf (DE)
(72) Inventor: SUDO, Atsushi, Tokyo 177-0044 (JP); KUDOH, Ryoichi, Shiga 520-0002 (JP); ARIMA, Kazuya, Saga 841-0076 (JP); NAKAYAMA, Hiroshi, Hyogo 655-0004 (JP); ENDO, Takeshi, Yokohama 220-0006 (JP); TADEN, Andreas, 40597 Düsseldorf (DE); HUVER, Thomas, 40625 Düsseldorf (DE)
(86) International application number: PCT/EP2007/059623
(87) International publication number: WO 2008/034753

(56) References cited:
- EP-A- 0 602 559
- WO-A-01/96440
- WO-A2-2008/034814
- US-A1- 2005 272 911
- US-B1- 6 376 080

## Description

The present invention relates to a curable composition comprising at least one polymerization catalyst in combination with at least one polymerizable benzoxazine component, wherein the polymerization catalyst comprises at least two components, wherein at least one of those components is selected from the group of nitrogen containing heterocycles and/or their derivatives and at least one of those components is selected from the group of organic sulfonic acids and/or organic sulfonic acid derivatives, as well to use of said catalysts.

Electronic devices such as circuit boards, semiconductors, transistors, and diodes are often coated with materials such as epoxy resins for protection. Such coating materials are often cured on the surface of an electronic device by heat. But electronic devices often are sensitive to heat, and too much heat may adversely affect the performance of a device. It is also a problem in practice that a lot of energy is necessary for heating and/or the time which is necessary for polymerization and curing reaction is too long.
Further, if the coating material shrinks or expands significantly in response to heat, the device it coats may be warped. Thus, it is desirable to develop methods for curing coating materials at relatively low temperatures in short time periods and to develop coating materials that have a near-zero volume change upon heat treatment so as to minimize the possiblities of damaging the coated devices. Therefore it is an ongoing effort in research departments to look for ways to reduce the temperature and improve the polymerization step.
It is known that acidic catalysts can contribute to solve the above mentioned problems. Acids may be relatively efficient polymerization catalysts. Depending on their amount it may be possible to reduce the temperature and improve the polymerization step.
However, in practical applications, such strong acids also may negatively contribute to the final polymerization result and it's practical properties. For example deterioration of chemical resistance and physical properties of the cured material may appear.
Therefore it is a special intention of the present invention, to achieve good polymerization results with lower amounts of acidic catalysts.

In particular when different polymerization products are possible it is necessary to have means to direct the polymerization reaction into a direction which is of advantage for the practical use.

For example, it has been known that during polymerization of benzoxazine monomers by curing reactions, two types of repeating units are accessible. One is the ether-type repeating unit and the other is the Mannich-type repeating unit. It has been considered that the ether-type is one of the final products and will not undergo any reaction under the polymerization conditions. On the other hand, the inventors discovered that the ether-type is not a stable final product, but an intermediate structure that forms in the first step predominantly and it undergoes a main chain rearrangement in the second step to give the corresponding Mannich-type structure as shown in scheme 1.

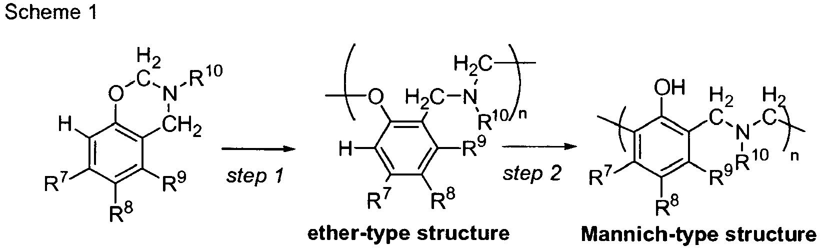

For various applications of such polymers to structural materials, sealant and adhesives, the polymer must be thermally stable as much as possible. A further transition step from one structure into another one could cause serious problems in many cases, especially when already applied in practical use. Therefore, efficient and selective formation of one stable product, e.g. the Mannich-type poly(benzoxazine) is extremely desireable.
Depending on the monomer structure the temperature required for the rearrangement from the ether-type to the Mannich-type structure can be very high, mostly still above 200 °C. Even by usage of conventional polymerization catalysts such as phenols, carboxylic acids, organic sulfonic acids, amines, imidazoles, and phosphines the polymerization results are not satisfying in regard to specific aspects.
Looking at the organic sulfonic acids, those are relatively efficient catalysts, whereas the efficacy strongly depends on the amount of use. If the concentration of the organic sulfonic acid is high enough this can lead to a smooth polymerization process at acceptable temperature. Otherwise it might be that the quality of the polymerization product and/or the cured material would have negative impact on the final product. This might lead to increased corrosion or further negative effects caused by the acid catalyst. Therefore, as already explained, in practical applications, amount of such strong acids must be reduced as much as possible in order to prevent deterioration of chemical resistance and physical properties of the cured material.

Lewis acids such as PCl₅, TiCl₄, AlCl₃ are also known as highly active catalysts and may be used for such low temperature polymerization, too. However they are highly sensitive to moisture and cause formation of volatile, toxic, and corrosive impurities, avoiding their practical use.
Therefore it is a further target of the present invention to make available moisture- and air-tolerant catalyst-components, by which the polymerization/curing reaction can be carried out without caution to decomposition of the catalyst-component and resulting evolution of toxic and/or corrosive by-products.

Therefore it is an object of the present invention to make available curable composition comprising at least one polymerizable benzoxazine component and a polymerization catalyst, which is able to catalyze polymeric reactions at acceptable low temperature and at the same time leads to a decrease of negative impacts by the catalyst(s) used in the system.

Consequently one subject of the present invention is a curable composition comprising at least one polymerizable benzoxazine component and a polymerization catalyst, comprising at least two components, wherein
a) at least one or more of said at least two components is selected from the group of nitrogen containing heterocycles and/or their derivatives, whereas the heterocycles are preferably selected from the group of imidazoles, in particular those having a melting point below 120 °C and
b) at least one or more of said at least two components is selected from the group of organic sulfur containing acids and/or derivatives of organic sulfur containing acids, preferably from organic sulfonic and sulfuric acids and their derivatives and mixtures of them, in particular from organic sulfonic acids and/or organic sulfonic acid derivatives.

In a preferred embodiment the molar ratio of said nitrogen containing heterocycles and/or their derivatives to said organic sulfur containing acids and/or derivatives of organic sulfur containing acids in the polymerization catalyst according to the present invention are from 10:1 to 1:10, preferable from 3:1 to 1:3.
These ranges are preferred to achieve the best effect of the catalyst according to the present invention. In particular the main chain rearrangement from ether type to Mannich type structure will be improved in these ranges, giving a polymer product with less contamination by ether-type polybenzoxazine.

The nitrogen containing heterocycles according to the present invention can be saturated, unsaturated, or aromatic. Besides the above mentioned imidazoles it may also be preferred that the nitrogen containing heterocycles are a thiazole, an oxazole, an imidazole, a pyridine, a piperidine, or a pyrimidine, a piperazine, a pyrrole, an indole or a benzthiazolyl. It is furtheron preferred that there is no acidic functional group present at the nitrogen containing heterocycles.
Most preferably, the nitrogen containing heterocyclic moiety is a thiazole and/or an imidazole.
In particular it is preferred that the nitrogen containing heterocycles and/or their derivatives according to the present invention are selected from the group of imidazoles and/or imidazole derivatives with formula I 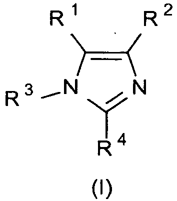 with
R¹, R², R³ and R⁴ being hydrogen or aliphatic or aromatic hydrocarbons, whereas it is especialle preferred that said imidazole is selected from the group of imidazole, 2-methylimidazole, 2-ethylimidazole, 2-undecylimidazole, 2-heptadecylimidazole, 2-phenylimidazole, 1,2-dimethyl imidazole, 2-ethyl-4-methylimidazole, 2-phenyl-4- methylimidazole, 1-benzyl-2-phenylimidazole, 1-benzyl-2-methylimidazole, 1-cyanoethyl-2-methylimidazole or 1-aminoethyl-2-methylimidazole.

Furtheron it is preferred, that the organic sulfur containing acids and/or derivatives of organic sulfur containing acids according to the present invention are selected from the group of sulfonic acids according to formula II 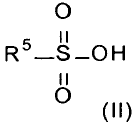 wherein R⁵ is preferably selected from aromatic groups, alkyl groups and fluorinated alkyl groups. In particular the organic sulfonic acid of the present invention is selected from the group of sulfonic acids according to formula III, IV, V and VI.

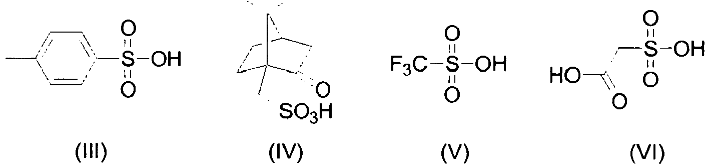

It is also of advantage in the sense of the present invention, that the at least two components of the polymerisation catalyst are stable to moisture and air and most preferably also any potential further components in the polymerization catalyst are stable to moisture and air (or moisture- and air-tolerant). This allows to perform polymerization/curing reactions at lower temperature without decomposition of the catalyst-component upon exposure to moisture and air. In particular the inventive catalyst allows to achieve the thermodynamical stable final product of the polymerization/curing reaction at lower temperature than by usage of only a single catalytic component out of the catalytic components according to the present invention.

It is preferred that the curable composition can be used to form a polybenzoxazine (PBO) composition. The preferred PBO composition contains a PBO, a catalyst and optionally an epoxy resin and/or a phenolic resin.
An example of an epoxy resin is epoxy cresol novalac. The molding composition may include, for example, 0.5 weight % to 7.0 weight %, preferably 1.5 weight % to 3.5 weight %, of the epoxy resin.

An example of a phenolic resin is phenolic novalac. The molding composition may include, for example, 0.1 weight % to 3.0 weight %, preferably 0. 3 weight % to 1.5 weight %, of the phenolic resin.
In particular it is preferred that the at least one polymerizable benzoxazine component according to the present invention is a component according to formula VII: 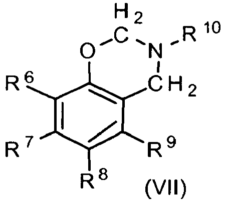 wherein
R⁶=H;
R⁷ is a linear or branched substituted or non substituted alkyl or aromatic group, R⁸, R⁹, R¹⁰ are independently selected from hydrogen, linear or branched substituted or non substituted alkyl, preferably with less than 12 C-atoms and aromatic group, whereas R¹⁰ preferably is an aromatic group;
R⁷ and R⁸ or R⁸ and R⁹ can optionally form a cyclic structure.

In particular polybenzoxazines (PBO) can be used to provide a coating on electronic devices such as circuit boards and semiconductors. The preferred PBO compositions have high glass transition temperature, good electrical properties (e.g., dielectric constant), low flammability, and a near-zero percent shrinkage and expansion upon demolding, postcuring, and cooling.

Preferably the at least one benzoxazine component according to formula VII with R⁷, R⁸, R⁹, and R¹⁰ comprises a further benzoxazine structure represented as 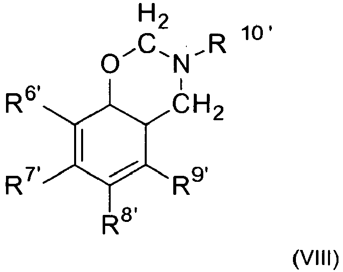 wherein R^{6'}, R^{7'}, R^{8'}, R^{9'}, and R^{10'} are selected from hydrogen, linear or branched substituted or non substituted alkyl group and aromatic group.

It is furtheron preferred that the inventive composition comprises at least one benzoxazine component selected from 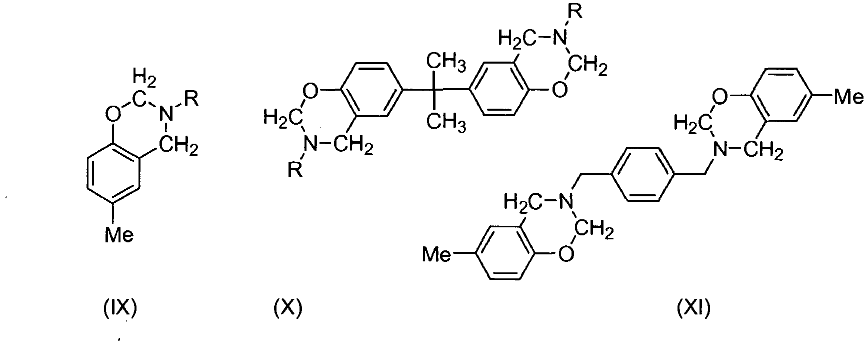 wherein R is a linear or branched substituted or non substituted alkyl or aromatic group and preferably R is a aromatic group;

It is furtheron a preferred composition, that the molar ratio between said one or more of the polymerizable component(s) according to the present invention and the polymerisation catalyst(s) according to the present invention is 90:10 to 99.9:0.1 preferably 95:5 to 99.5:0.5.
The benzoxazine-containing molding compositions can be prepared by any conventional methods. For example, the ingredients (including resins and other additives) can be finely ground, dry blended, densified on a hot differential roll mill, and then followed by granulation. The molding composition, as described above, can be used for coating electronic devices such as semiconductors or circuit boards. The prepared compositions can be molded by any suitable molding apparatus. An example of such an apparatus is a transfer press equipped with a multi-cavity mold. For more detail on methods for preparing molding compositions and for coating electronic devices, see U.S. Pat. No. 5,476,716.
Below are some examples of other additives that can be included in the molding composition and the preferred ranges of their weight percent in the composition:
(1) A flame retardant such as a brominated epoxy novolac flame retardant (e.g., BREN, available from Nippon Kayaku). The preferred molding composition can contain up to 3.0 wt %, more preferably, 0.1-1.0 wt % of a flame retardant.
(2) A flame retardant synergist such as Sb 2 O 5 or WO 3 . The preferred molding composition can contain up to 3.0 wt %, more preferably, 0.25- 1.5 wt % of a flame retardant synergist.
(3) A filler such as silica, calcium silicate, and aluminum oxide. The preferred molding composition can contain 70-90 wt %, more preferably, 75- 85 wt % of a filler.
(4) A colorant such as carbon black colorant. The preferred molding composition can contain 0.1-2.0 wt %, more preferably, 0.1-1.0 wt % of a colorant.
(5) A wax or a combination of waxes such as carnauba wax, paraffin wax, S-wax, and E-wax. The preferred molding composition can contain 0.1-2.0 wt %, more preferably, 0.3-1.5 wt % of a wax.
(6) Fumed silica such as aerosil. The preferred molding composition can contain 0.3-5.0 wt %, more preferably, 0.7-3.0 wt % of fumed silica.
(7) A coupling agent such as the silane type coupling agent. The preferred molding composition can contain 0.1-2.0 wt %, more preferably, 0.3-1. 0 wt % of a coupling agent.

Also preferred is a composition wherein said composition comprises at least one additional solvent, preferably selected from ethers, ketones, esters, chlorinated hydrocarbons, aromatics, amides, alcohols, in particular selected from ester-type solvents and ketone-type solvents.

When it comes to curing temperatures it is preferred that the compositions according to the present invention are curable at a temperature from 100 °C to 250 °C, preferably from 130 °C to 180 °C, in particular from 130 to 160 °C.

When it comes to curing pressures it is preferred that the compositions according to the present invention are curable at a pressure between 1 to 100 atm, preferably under atmospheric pressure.

Compositions according to the present invention preferably are comprising 20 % by weight to 99,9 % by weight, more preferably 40 % by weight to 99,5 % by weight, most preferably 50 % by weight to 99 % by weight of one or more of the accordingly included polymerizable component(s) relative to the total composition.

A further subject of the present invention is a copolymerization and/or a polymerization product which is achievable by curing of a composition according to the present invention.

In particular it is preferred to arrive at a copolymerization and/or a polymerization product by following the present invention, wherein by coming from one or more benzoxazine monomer(s) a greater part of the Mannich-type structure is made available than by usage of a polymerization catalyst, comprising only one catalytic component selected from the group of nitrogen containing heterocycles and/or their derivatives or from the group of organic sulfur containing acids and/or derivatives of organic sulfur containing acids.

It is preferred, that the portion of the Mannich-type structure in the copolymerization and/or a polymerization product according to the present invention is higher than 50 weight %, more preferably higher than 70 weight %, most preferably higher than 90 weight % related to the total weight of the copolymerization and/or polymerization product.

Preferably the copolymerization and/or a polymerization product according to the present invention comprises at least one polymerization catalyst as defined previously.

A copolymerization and/or a polymerization product according to the present invention can preferably be produced by usage of a range of curing temperature from 100 °C to 200 °C, more preferably from 130 °C to 180 °C, most preferably from 130 °C to 160 °C.

In a preferred embodiment a composition and/or a copolymerization and/or a polymerization product according to the present invention is in the form of an adhesive, in which case one or more of an adhesion promoter, a flame retardant, a filler, a thermoplastic additive, a reactive or non-reactive diluent, and a thixotrope might be included. In addition, such an inventive adhesive may be placed in film form, in which case a support constructed from nylon, glass, carbon, polyester, polyalkylene, quartz, polybenzimidazole, polyetheretherketone, polyphenylene sulfide, poly p-phenylene benzobisoaxazole, silicon carbide, phenolformaldehyde, phthalate and napthenoate may be included.

The inventive compositions and/or a copolymerization and/or a polymerization products (and pregregs and towpregs prepared therefrom) are particularly useful in bonding of composite and metal parts, core and core-fill for sandwich structures and composite surfacing, and in the manufacture and assembly of composite parts for aerospace and industrial end uses, such as matrix resins for fiber reinforced composite articles, as matrix resins for use in prepregs, or as matrix resins in advanced processes, such as resin transfer molding and resin film infusion.

It is a further subject of the present invention to make use of at least one polymerization catalyst as defined previously in curable compositions comprising at least one benzoxazine component, which in a preferred embodiment is covered by formula VII: 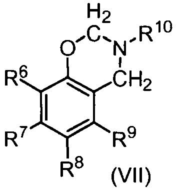 wherein
R⁶=H;
R⁷ is a linear or branched substituted or non substituted alkyl or aromatic group, R⁸, R⁹, R¹⁰ are independently selected from hydrogen, linear or branched substituted or non substituted alkyl and aromatic group, whereas R¹⁰ preferably is a aromatic group;
R⁷ and R⁸ or R⁸ and R⁹ can optionally form a cyclic structure.

In another preferred embodiment of the inventive use according to the present invention the at least one benzoxazine component according to formula VII with R⁷, R⁸, R⁹, and R¹⁰ comprises a further benzoxazine structure represented as 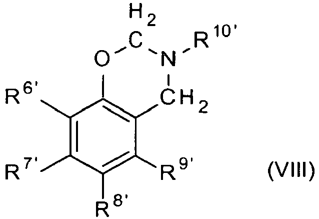 wherein R^{6'}, R^{7'}, R8^{'}, R^{9'}, and R^{10'} are selected from hydrogen, linear or branched substituted or non substituted alkyl group and aromatic group.

In particular the inventive use is fulfilled with a composition comprising at least one benzoxazine component selected from 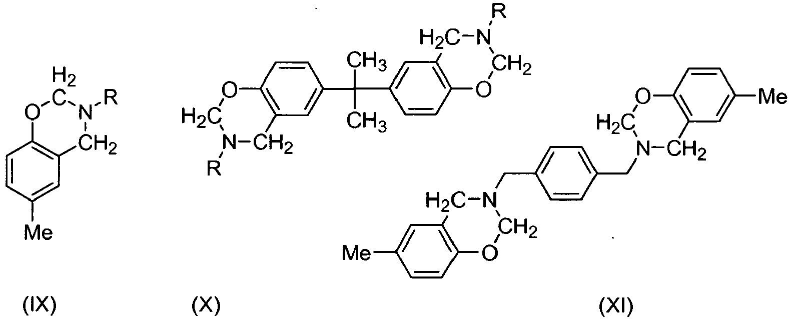 Wherein R is a linear or branched substituted or non substituted alkyl or aromatic group, preferably R is a aromatic group;

In regard to the inventive use it is also preferred to have a molar ratio between the at least one benzoxazine component according to the inventive use and the at least one catalyst according to the present invention of 90:10 to 99.9:0.1 and preferably from 95:5 to 99.5:0.5.

It is also preferred, that the compositions to be used according to the present invention comprise at least one additional solvent, preferably selected from ethers, ketones, esters, chlorinated hydrocarbons, aromatics, amides, alcohols, in particular selected from ester-type solvents and ketone-type solvents.

In another preferred embodiment of the inventive use the composition is curable at a temperature from 100 °C to 250 °C, more preferably from 130 °C to 180 °C, most preferably from 130 to 160 °C.

It is also preferred in connection with the inventive use to have compositions which are curable at a pressure between 1 to 100 atm, more preferably under atmospheric pressure.

In the composition to be applied in the inventive use it is preferred to have one or more of the accordingly included polymerizable component(s), in particular benzoxazine components in a concentration from 20 % by weight to 99,9 % by weight, more preferably 40 % by weight to 99,5 % by weight, most preferably 50 % by weight to 99 % by weight relative to the total composition.

Preferably the final compositions for the inventive use comprise additional components selected from the groups of inorganic fillers preferably silica powder, powdery metal oxide, and powdery metal or organic fillers preferably rubber particle and other polymer particles.

It is a further subject of the present invention to use curable compositions according to the present invention or a copolymerization and/or a polymerization products according to the present invention achievable from those inventive compositions, in the preparation of and/or as sealants, adhesives and/or coatings, preferably in electronic chip bonding and electronic chip underfills, whereby the sealants, adhesives and/or coatings are preferably applied to and hardened on or between substrates selected from the group comprising metals, silicates, metal oxides, concrete, wood, electronic chip material, semiconductor material and organic polymers.

In particular the curable compositions according to the present invention or a copolymerization and/or a polymerization product according to the present invention achievable from those inventive compositions are used for a variety of applications including adhesive and molded applications. Preferably the inventive use is directed to the application as adhesives where their low flammability is important (e.g. airplane interiors etc.) or where their thermal stability and easily modified physical properties such as modulus, tensile strength, and coefficient of expansion would be of value. As mentioned they could also be used in filled or unfilled molding applications,as matrix resins for fiber reinforced composite articles, as matrix resins for use in prepregs, or as matrix resins in advanced processes, such as resin transfer molding and resin film infusion.

A further subject of the present invention is a method of coating a device by heating a composition according to the present invention to a temperature sufficient to cure the composition, which preferably comprises a benzoxazine monomer, thus forming a polymer which coats a surface of the device, which is preferably an electronic device such as a semiconductor or a circuit board.
In case the composition comprises a benzoxazine monomer it is also preferred that the heating temperature is high enough to result in more than 50 weight %, more preferably more than 70 weight %, most preferably more than 90 weight % of the Mannich type structure related to the total weight of the copolymerization and/or polymerization product.

A further subject of the present invention is a device coated with a copolymerization and/or a polymerization product according to the present invention.
In a preferred embodiment the device can be an electronic device such as a semiconductor or a circuit board.
The present invention is exemplified in more detail by means of Examples, which follow below.

### EXAMPLES

### Example 1:

A benzoxazine according to scheme 1, formula **1a** (10 g, 44 mmol) and p-toluenesulfonic acid monohydrate [PTS] (76 mg, 0.40 mmol) as well as 2-ethyl-4-methylimidazole [EMI] (44 mg, 0.40 mmol) were brought together in a reaction vessel and heated at 40 °C for 1 h under vacuum, resulting in a homogeneous mixture.

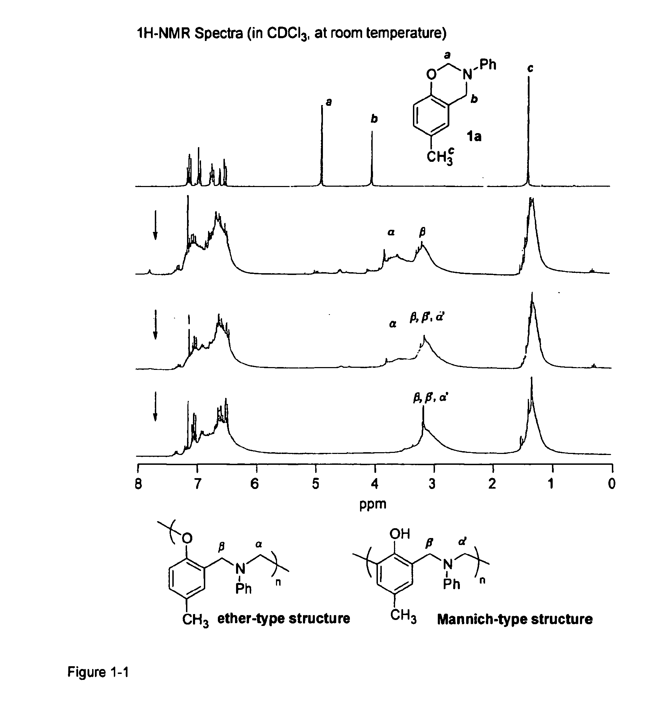

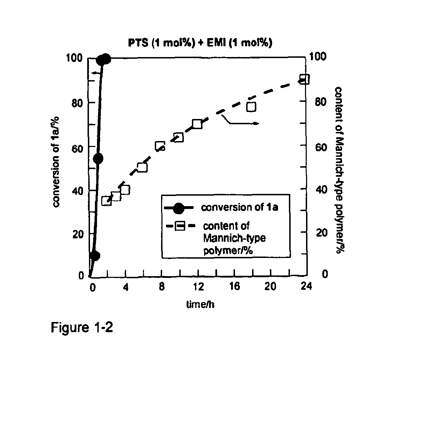

The resulting mixture was then heated at 150 °C. The progress of the reaction according to scheme 1 was observed by continuous ¹H-NMR analysis. Looking into Figure 1-1 gives a good explanation how the 1H-NMR monitoring of the polymerization works: the change of the amount and/or the disappearance of the characteristic peaks corresponds directly to the amount of the different chemical ingredients in the mixture. In other words this monitoring allows the calculation of monomer conversion and composition ratio between [ether-type] and [Mannich-type] structure.

Regarding to example 1 the ¹H-NMR spectra revealed, that the complete monomer was transformed into polymeric structure after 2 h heated at 150 °C.

After that the heating of the mixture was continued to observe ongoing main chain rearrangement.

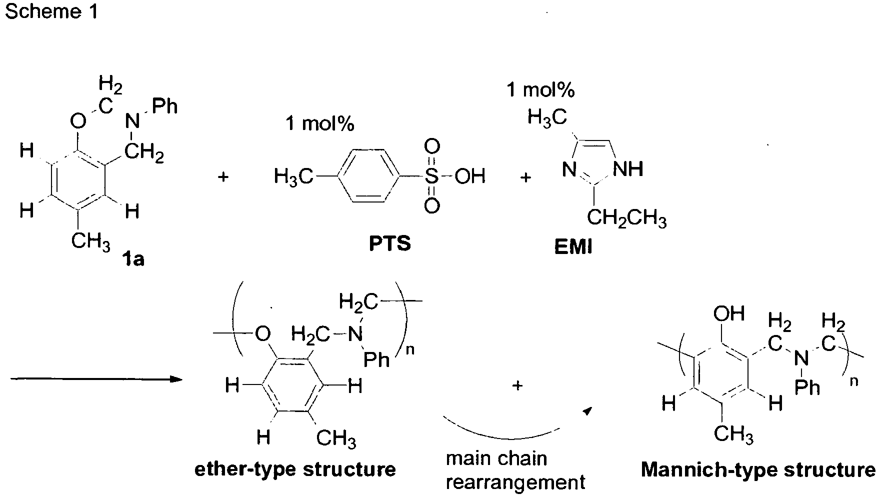

The following Figure 1-1 makes it visible how a typical example of 1H-NMR monitoring of the polymerization works. Consequently this allows calculation of monomer conversion and composition ratio [ether-type]:[Mannich-type].

Figure 1-2 corresponds to the 1 H-NMR monitoring process and documents the conversion time which was necessary to arrive at different concentrations of the polybenzoxazine (PBO) as well as the conversion time which was necessary to arrive at different concentrations of the Mannich-type structure of the PBO.

Further data are also incorporated in scheme 2 last line.

### Comparative Example 1:

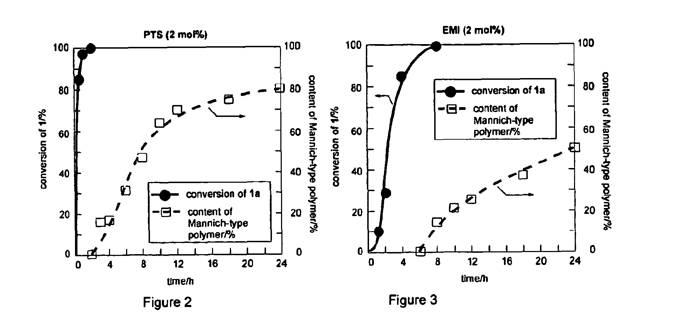

In a first comparative example the same conditions like in example 1 were used, with the only difference, that instead of a catalyst according to the present invention PTS (1 mol%)-EMI (1mol%) a single catalyst was used, in detail 2 mol% PTS was used. Data are also incorporated in scheme 2. From 1H-NMR-Monitoring it can be seen that the conversion of the monomer is quite rapid, as can be expected from the strong acidity of PTS (Figure 2). One can expect that 2 mol% PTS would be more powerful than the PTS (1 mol%)-EMI (1mol%) catalyst, because acidity of the former is much higher than the latter. However, if one compares the results at least the main chain rearrangement is more promoted by the PTS-EMI hybrid catalyst. By this example it also can be shown that the amount of acidic component can be reduced by the inventive catalyst without loosing catalytic efficacy.
In other words, replacement of a part of PTS with EMI allows not only reduction of the total acidity of the catalyst but also further improvement of the efficiency in main chain rearrangement.

### Comparative Example 2:

In another comparative example also the same conditions like in example 1 were used, with the only difference, that instead of the inventive catalyst combination PTS (1 mol%)-EMI (1mol%) a single catalyst 2 mol% EMI was used. Data are also incorporated in scheme 2.
It can easily be seen from the results compiled in figure 3 that both the monomer conversion as well as the main chain rearrangement were much slower than the polymerization using PTS as a catalyst. Looking at these results, the skilled man in the art would have expected no improvement by a combination of PTS and EMI, in opposite these results bring the man skilled in the art to the conclusion that the addition of such a low active and basic catalyst (=EMI) to PTS would result in just only deactivation of PTS. From this assumption, it was very surprising to see high catalytic activity of the PTS-EMI hybrid catalyst according to the present invention.

### Further examples:

Further examples can be seen from scheme 2 and table 1. In ref 3-5, PTS was combined with several nitrogen-containing compounds. The combination PTS+EMI lead to best results regarding main chain rearrangement. However also the combinations of PTS+DMP (ref 4) and PTS+Triazole (ref 5) gave good results regarding main chain rearrangement.

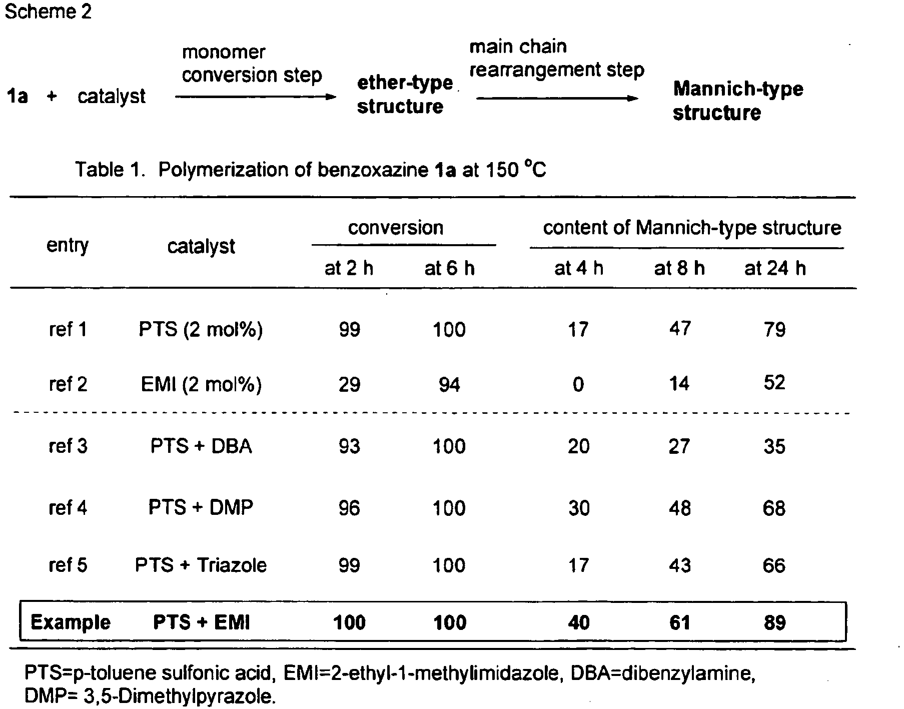

## Claims

1. A curable composition comprising at least one polymerization catalyst in combination with at least one polymerizable benzoxazine component, wherein the polymerization catalyst comprises at least two components, wherein at least one or more of said at least two components is selected from the group of nitrogen containing heterocycles and/or their derivatives and at least one or more of said at least two components is selected from the group of organic sulfur containing acids and/or derivatives of organic sulfur containing acids.

2. The curable composition according to claim 1, wherein the organic sulfur containing acids and/or derivatives of organic sulfur containing acids are selected from the group of organic sulfonic and sulfuric acids and their derivatives and mixtures of them.

3. The curable composition according to any preceding claim, wherein the molar ratio of said nitrogen containing heterocycles and/or their derivatives to said organic sulfur containing acids and/or derivatives of organic sulfur containing acids is from 10:1 to 1:10, preferable from 3:1 to 1:3.

4. The curable composition according to any preceding claim, wherein said nitrogen containing heterocycles and/or their derivatives are selected from the group of imidazoles and/or imidazole derivatives with formula I 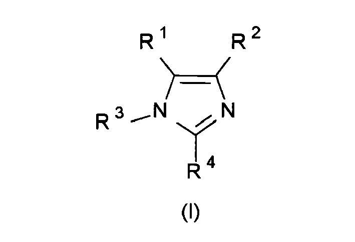 with
R¹, R², R³ and R⁴ are hydrogen or aliphatic or aromatic hydrocarbons,

5. The curable composition according to claim 4, wherein said imidazole is selected from the group of imidazole, 2-methylimidazole, 2-ethylimidazole, 2-undecylimidazole, 2-heptadecylimidazole, 2-phenylimidazole, 1,2-dimethyl imidazole, 2-ethyl-4-methylimidazole, 2-phenyl-4-methylimidazole, 1-benzyl-2-phenylimidazole, 1-benzyl-2-methylimidazole, 1-cyanoethyl-2-methylimidazole or 1-aminoethyl-2-methylimidazole.

6. The curable composition according to claim 2, wherein said organic sulfonic acid is selected from the group of sulfonic acids according to formula III, IV, V and VI.

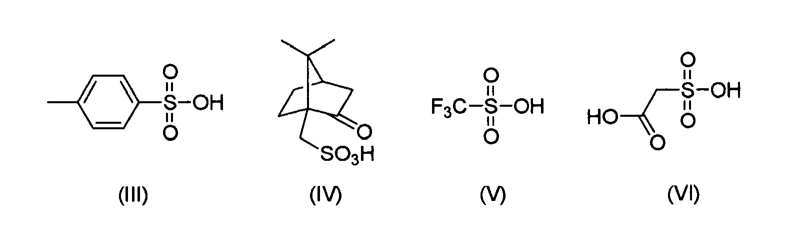

7. The composition according to any preceding claim, wherein the molar ratio between said one or more polymerizable benzoxazine component(s) and said polymerization catalyst(s) is 90:10 to 99.9:0.1 preferably 95:5 to 99.5:0.5.

8. The composition according to any preceding claim, wherein said composition is curable at a temperature from 100 °C to 250 °C, preferably from 130 °C to 180 °C, more preferably from 130 °C to 160 °C.

9. The composition according to any preceding claim, comprising 20 % by weight to 99,9 % by weight of said one or more polymerizable benzoxazine component(s) relative to the total composition.

10. A copolymerization and/or a polymerization product achievable by curing of a composition according to any of claims 1 to 9.

11. Use of at least one polymerization catalyst of the curable composition according to claims 1 to 9 in curable compositions comprising at least one benzoxazine component.

12. Use according to claim 11, wherein the benzoxazine component makes 20 % by weight to 99.9 % by weight, based on the total composition.

13. Method of coating a device by heating a composition according to one or more of claims 1 to 9 to a temperature sufficient to cure the composition, thus forming a polymer which coats a surface of the device, which is preferably an electronic device such as a semiconductor or a circuit board.

14. Device coated with a copolymerization and/or a polymerization product according to claim 10.

## Patentansprüche

1. Härtbare Zusammensetzung, die mindestens einen Polymerisationskatalysator in Kombination mit mindestens einem polymerisierbaren Benzoxazinbestandteil umfasst, wobei der Polymerisationskatalysator mindestens zwei Bestandteile umfasst, wobei mindestens einer oder mehrere der mindestens zwei Bestandteile aus der Gruppe von stickstoffhaltigen Heterocyclen und/oder deren Derivaten ausgewählt ist und mindestens einer oder mehrere der mindestens zwei Bestandteile aus der Gruppe von organischen schwefelhaltigen Säuren und/oder Derivaten von organischen schwefelhaltigen Säuren ausgewählt ist.

2. Härtbare Zusammensetzung nach Anspruch 1, wobei die organischen schwefelhaltigen Säuren und/oder die Derivate von organischen schwefelhaltigen Säuren aus der Gruppe von organischen Sulfon- und Schwefelsäuren und deren Derivaten und Gemischen dieser ausgewählt sind.

3. Härtbare Zusammensetzung nach einem vorhergehenden Anspruch, wobei das Molverhältnis der stickstoffhaltigen Heterocyclen und/oder deren Derivaten zu den organischen schwefelhaltigen Säuren und/oder den Derivaten von organischen schwefelhaltigen Säuren 10:1 bis 1:10, vorzugsweise 3:1 bis 1:3 beträgt.

4. Härtbare Zusammensetzung nach einem vorhergehenden Anspruch, wobei die stickstoffhaltigen Heterocyclen und/oder deren Derivate aus der Gruppe von Imidazolen und/oder Imidazolderivaten mit der Formel I ausgewählt sind: 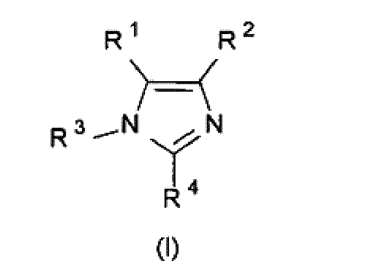 wobei
R¹, R², R³ und R⁴ Wasserstoff oder aliphatische oder aromatische Kohlenwasserstoffe sind.

5. Härtbare Zusammensetzung nach Anspruch 4, wobei das Imidazol aus der Gruppe von Imidazol, 2-Methylimidazol, 2-Ethylimidazol, 2-Undecylimidazol, 2-Heptadecylimidazol, 2-Phenylimidazol, 1,2-Dimethylimidazol, 2-Ethyl-4-methylimidazol, 2-Phenyl-4-methylimidazol, 1-Benzyl-2-phenylimidazol, 1-Benzyl-2-methylimidazol, 1-Cyanoethyl-2-methylimidazol oder 1-Aminoethyl-2-methylimidazol ausgewählt ist.

6. Härtbare Zusammensetzung nach Anspruch 2, wobei die organische Sulfonsäure aus der Gruppe von Sulfonsäuren gemäß der Formeln III, IV, V und VI ausgewählt ist:

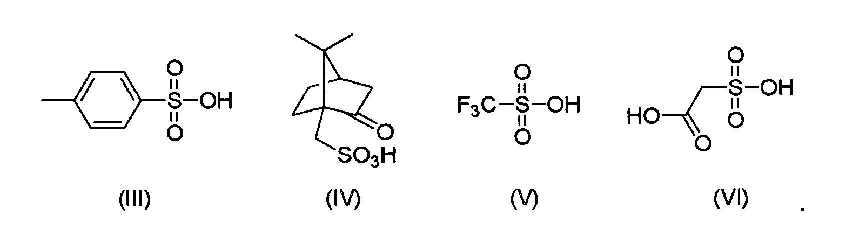

7. Zusammensetzung nach einem vorhergehenden Anspruch, wobei das Molverhältnis zwischen dem einen oder den mehreren polymerisierbaren Benzoxazinbestandteilen und dem bzw. den Polymerisationskatalysatoren 90:10 bis 99,9:0,1, vorzugsweise 95:5 bis 99,5:0,5 beträgt.

8. Zusammensetzung nach einem vorhergehenden Anspruch, wobei die Zusammensetzung bei einer Temperatur von 100 °C bis 250 °C, vorzugsweise von 130 °C bis 180 °C, mehr bevorzugt von 130 °C bis 160 °C härtbar ist.

9. Zusammensetzung nach einem vorhergehenden Anspruch, die 20 Gew.-% bis 99,8 Gew.-% des einen oder der mehreren polymerisierbaren Benzoxazinbestandteile umfasst, bezogen auf die Gesamtzusammensetzung.

10. Copolymerisations- und/oder Polymerisationsprodukt, das durch Härten einer Zusammensetzung nach einem der Ansprüche 1 bis 9 erzielt werden kann.

11. Verwendung mindestens eines Polymerisationskatalysators der härtbaren Zusammensetzung nach den Ansprüchen 1 bis 9 in härtbaren Zusammensetzungen, die mindestens einen Benzoxazinbestandteil umfassen.

12. Verwendung nach Anspruch 11, wobei der Benzoxazinbestandteil 20 Gew.-% bis 99,9 Gew.-% ausmacht, bezogen auf die Gesamtzusammensetzung.

13. Verfahren zum Beschichten einer Vorrichtung durch Erhitzen einer Zusammensetzung nach einem oder mehreren der Ansprüche 1 bis 9 auf eine Temperatur, die dazu ausreicht, die Zusammensetzung zu härten, wodurch ein Polymer gebildet wird, das eine Oberfläche der Vorrichtung beschichtet, bei dem es sich vorzugsweise um eine elektronische Vorrichtung handelt, wie einen Halbleiter oder eine Leiterplatte.

14. Vorrichtung, die mit einem Copolymerisations- und/oder Polymerisationsprodukt nach Anspruch 10 beschichtet ist.

## Revendications

1. Composition durcissable comprenant au moins un catalyseur de polymérisation en combinaison avec au moins un composant benzoxazine polymérisable, dans laquelle le catalyseur de polymérisation comprend au moins deux composants, dans laquelle au moins un ou plusieurs desdits au moins deux composants est(sont) sélectionné(s) parmi le groupe des hétérocycles contenant de l'azote et/ou leurs dérivés et au moins un ou plusieurs desdits au moins deux composants est(sont) sélectionné(s) parmi le groupe des acides contenant du soufre organique et/ou des dérivés des acides contenant du soufre organique.

2. Composition durcissable selon la revendication 1, dans laquelle les acides contenant du soufre organique et/ou les dérivés d'acides contenant du soufre organique sont sélectionnés parmi le groupe des acides sulfonique et sulfurique organiques et leurs dérivés et les mélanges d'entre eux.

3. Composition durcissable selon l'une quelconque des revendications précédentes, dans laquelle le rapport molaire desdits hétérocycles contenant de l'azote et/ou leurs dérivés par rapport auxdits acides contenant du soufre organique et/ou dérivés d'acides contenant du soufre organique est de 10:1 à 1:10, de préférence de 3:1 à 1:3.

4. Composition durcissable selon l'une quelconque des revendications précédentes, dans laquelle lesdits hétérocycles contenant de l'azote et/ou leurs dérivés sont sélectionnés parmi le groupe des imidazoles et/ou dérivés d'imidazole avec la formule I 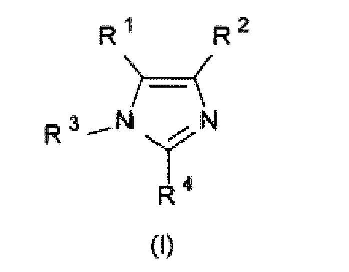 avec
R¹, R², R³ et R⁴ qui sont des atomes d'hydrogène ou des hydrocarbures aliphatiques ou aromatiques.

5. Composition durcissable selon la revendication 4, dans laquelle ledit imidazole est sélectionné parmi le groupe de l'imidazole, du 2-méthylimidazole, 2-éthylimidazole, 2-undécylimidazole, 2-heptadécylimidazole, 2-phénylimidazole, 1,2-diméthylimidazole, 2-éthyl-4-méthylimidazole, 2-phényl-4-méthylimidazole, 1-benzyl-2-phénylimidazole, 1-benzyl-2-méthylimidazole, 1-cyanoéthyl-2-méthylimidazole ou 1-aminoéthyl-2-méthylimidazole.

6. Composition durcissable selon la revendication 2, dans laquelle ledit acide sulfonique organique est sélectionné parmi le groupe des acides sulfoniques selon la formule III, IV, V et VI.

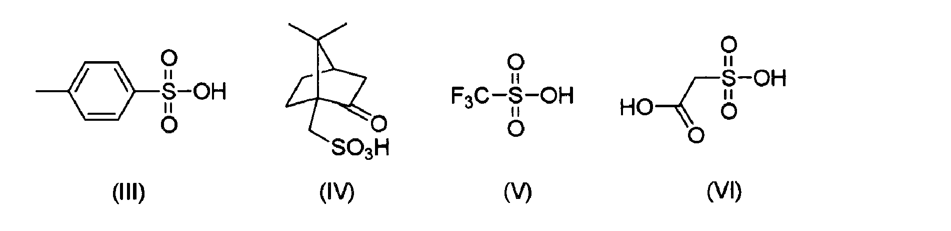

7. Composition selon l'une quelconque des revendications précédentes, dans laquelle le rapport molaire entre ledit un ou plusieurs composant(s) polymérisable(s) benzoxazine et le(s)dit(s) catalyseur(s) de polymérisation est de 90:10 à 99,9:0,1 de préférence 95:5 à 99,5:0,5.

8. Composition selon l'une quelconque des revendications précédentes, dans laquelle ladite composition est durcissable à une température de 100°C à 250°C, de préférence de 130°C à 180°C, plus préférablement de 130°C à 160°C.

9. Composition selon l'une quelconque des revendications précédentes, comprenant 20 % en poids à 99,9 % en poids dudit un ou plusieurs composant(s) polymérisable(s) benzoxazine par rapport à la composition totale.

10. Produit de copolymérisation et/ou polymérisation pouvant être atteint par durcissement d'une composition selon l'une quelconque des revendications 1 à 9.

11. Utilisation d'au moins un catalyseur de polymérisation de la composition durcissable selon les revendications 1 à 9 dans les compositions durcissables comprenant au moins un composant benzoxazine.

12. Utilisation selon la revendication 11, dans laquelle le composant benzoxazine représente 20 % en poids à 99,9 % en poids, sur la base de la composition totale.

13. Procédé de revêtement d'un dispositif par chauffage d'une composition selon l'une ou plusieurs des revendications 1 à 9 à une température suffisante pour durcir la composition, formant ainsi un polymère qui revêt une surface du dispositif, qui est de préférence un dispositif électronique tel qu'un semiconducteur ou une carte de circuits imprimés.

14. Dispositif revêtu d'un produit de copolymérisation et/ou polymérisation selon la revendication 10.
